# EUROPEAN PATENT SPECIFICATION

(11) **EP 2 550 551 B1**
(45) Date of publication and mention of the grant of the patent: **17.12.2014**
(21) Application number: 11719628.7
(22) Date of filing: 21.03.2011
(51) Int. Cl.: G01V 3/08

(54) **A SYSTEM FOR SCANNING OF EARTH'S SELF-POTENTIAL FIELD**
SYSTEM ZUR ERFASSUNG DES SELBSTPOTENTIALS DER ERDE
SYSTÈME DE BALAYAGE DU CHAMP D'AUTO-POTENTIEL DE LA TERRE

(30) Priority: 22.03.2010 IN DE06702010
(43) Date of publication of application: 30.01.2013
(73) Proprietor: Council of Scientific & Industrial Research, New Delhi 110 001 (IN)
(72) Inventor: BANDI, Vijayagopal, Hyderabad 500 007 (IN); NANDURI, Purushotham, Rajendra, Prasad, Hyderabad 500 007 (IN); DEVANATHA, Muralidharan, Hyderabad 500 007 (IN); UPPALA, Sathyanarayana, Hyderabad 500 007 (IN)
(74) Representative: Lebrette, Camille
(86) International application number: PCT/IB2011/000587
(87) International publication number: WO 2011/117704

(56) References cited:
- US-A- 4 087 741
- US-A- 4 658 215
- US-A- 5 514 963
- US-A- 5 514 963
- Andalan Tunas Mandiri: "9.3D MultiChannel Full Autonumous Resistivity & IP Monitoring System", http://ptandalan.com/?page_id=406 , 31 December 2008 (2008-12-31), XP000002658368, Retrieved from the Internet: URL:http://ptandalan.com/?page_id=406 [retrieved on 2008-12-31]
- WEIGEL M: "Self-potential surveys on waste dumps theory and practice", LECTURE NOTES IN EARTH SCIENCES : LNES, SPRINGER, vol. 27, 1 January 1989 (1989-01-01), pages 109-120, XP009151689, ISSN: 0930-0317, DOI: 10.1007/BFB0011634
- Geosoft: "Induced Polarization - montaj extension developed by geosoft.", Internet , 31 December 2009 (2009-12-31), XP000002658369, Retrieved from the Internet: URL:http://www.geosoft.com/media/uploads/r esources/brochures/OM_IP_fs_2009_10_web.pd f [retrieved on 2009-12-31]

## Description

### FIELD OF INVENTION

The present invention relates to a system for scanning of earth's self potential field. The present invention particularly relates to a system with a stacking facility to scan the earth's Self-Potential field in quicker time phase and repeatable time lags over an area using multi-electrode sensors and creating images of the area understudy in the field itself.

### BACKGROUND OF THE INVENTION

Self-Potential (SP) survey is one of the geophysical prospecting methods, used for mineral prospecting, groundwater movement studies. SP method essentially measures the natural electrical fields which are developed in the subsurface formations due to electro-kinetic coupling, thermoelectric coupling, electrochemical influences and cultural activities. The SP method has been applied in a wide class of geological problems: mineral prospecting, detection and delineation of thermal sources in geothermal and volcanic areas and groundwater studies.

SP field measurements have been used as a potential tool for natural resource exploration over many decades. However, many difficulties were experienced due to measurement of low natural signals overcoming the noise, minimizing the contact potential effect, measuring in quick time phase as the field is transient and influenced by earth's telluric current, covering of larger areas, number of repeat measurements for the same field station and so on [ref.1,2,3]. With these constraints, the SP exploration tool remained as one of the least preferred exploration tool in the field of geophysics.

Prior art instruments developed for conducting SP survey generally fall in two major field application categories namely the profiling (1D) & mapping (2D) with natural constraints mentioned above. In the first type, the self potential measurements were made along a profile line of any length of interest and inter-electrode spacing. The second type, the measurements are made over an area of interest covering in both the directions in a mesh form.

The measurement of potentials in time-domain over an area can reflect the dynamic changes that are occurring in the sub-surface such as preferred groundwater flow through fracture zone in hard rock areas, induced groundwater flow due to pumping, recharge plume migration and contaminant migration. In the case of mineral exploration, since the field is more or less in static condition, mapping of potentials over an area of interest may enable exploration of the mineralized belt. The potential field difference on the basis of electro-kinetic field contrast existing due to differential movement of groundwater and electrochemical double layering which originally exists in solid/fluid form on the boundary surface results in a potential difference as a consequence of the electrical charges is being mapped. However, as the potentials to be measured at the surface are being very low, high precision measurement at quicker time phase becomes preferable.

Reference may be made to U.S.Patent No. 5,514,963 (Korbmacher et. al.) which describes a monitoring method over an area wherein the potential and resistance are measured by means of probes arranged in a grid fashion over the surface and acquiring the data in time series and processing through a centralized computer system. The example given in patent pertains to the mapping of fracture propagation through hydro-fracturing technique in which the potential field developed due to the fluid movement under great pressure along the newly created and connected fracture paths. The efficiency of SP measurement in conjunction (coupling) with resistance measurement up-scaled through induced transient dynamic changes method is claimed as an invention.The drawback of the above said US patent is that it do not provide stacking facility and data can not be viewed in profile form in the field itself.

Reference may be made to the journal "Field measurements of Electrokinetic Potential during a pumping test", Regolith 2006 - Consolidation & Dispersion of ideas- Page 196-200 by Sukhyoun Kim Graham Heison and John Joseph", developing a new and efficient geophysical method of investigating hydro geological properties without the requirement of having piezometers. Electrokinetic potentials (EP) are mainly generated by fluid flows and heat fluxes in the ground. Fluid flow through pores and fractures in the ground produce an electric field called electrokinetic potential. It can, therefore, be used as a tool to detect groundwater flow (Kim *et al,* 2005). This means that the electrokinetic potential method can be an alternative to conventional methods to determine permeability of fracture systems (Darnet *et al.* 2003).

The drawback of above said reference is that the data is recorded as a function of time, separately for each electrode. There is no provision for plotting spatial (2D) variation. The data is measured at 1 Hz and the measurement resolution is 100 µvolts.

Reference may be made to the journal "Application of the self-potential method to Archaeological Prospection: Some case histories", Archaeological Prospect. 11, 77-105(2004) by M.G.Drahar, dislosing that the SP anomalies existed over both burned or unburned materials at archaeological sites, such aswalls, pits, kilns, etc. Furthermore, the SP anomalieswere also found over areas of complex soil distribution and visible physical changes on the surface. Other kinds of SP anomalies were also observed in those archaeological structures located very close to the coastline. These results were confirmed by archaeological excavations, which were carried out after geophysical surveys in the areas studied. All the studies supported that electro kinetic and electro chemical potentials might be the main cause of SP anomalies in the buried archaeological structures. The SP data collected with the gradient and total measurement techniques were processed by forward and inversion methods, and the main SP parameters (h, Q and x0) were determined. In addition, the SP results were compared with other applied geophysical methods such as resistivity and magnetic.

Reference may be made to the journal " Detection of leakage from dams by self-potential method", Engineering Geology, 37 (1994) 115-121, by N.A. Al-Saigh, Z.S. Mohammad, M.S. Dahham, disclosing that the repeated observations of SP data at two different reservoir levels showed no great change in the leakage flow behaviour. Detailed mapping of SP values in the area revealed the possible presence of two sinkholes, the first with an estimated diameter of about 25-30 m and the second with a diameter of about 15 m based on a qualitative interpretation of the SP anomalies. The location of these two sinkholes coincides with the position of two subsurface normal faults in the area.

The drawback of above two references is that only two electrodes (one reference and one positioned at various locations) are used and a digital multi-meter was employed for measuring SP. As manual measurement is employed there without any data stacking facility and it takes considerable time to cover the area of interest. This is not acceptable in the case where SP is changing rapidly with time. There is no in-field data processing and image display feature. Reference is made to A.T. Mandiri "9.3D MultiChannel Full Autonumous Resistivity & IP Monitoring System",2008 (http://ptandalan.com/?page_id=406) and US 5514963.

It is desirable to have an instrument capable of overcoming all these natural constraints to a maximum possible extent and to make the SP method to be an effective exploration tool. In addition, it is desirable to have the potential field in an image form in the field itself facilitating the reflection of sub-surface immediately and facilitating the planning for further extension of survey and so on.

### OBJECT OF THE INVENTION

The main object of the present invention is to provide a system to scan the self-potential field over an area and in which the method overcomes the constraints of signal-to-noise ratio.

Another object of the present invention is to minimizing the contact potential; fast data scanning - measuring each electrode potential in about 0.5 milliseconds with stacking up to 100 times and completing the scanning of 64 electrodes in about 32 milliseconds and displaying the image in fraction of a minute.

Yet another object of the present invention is to averaging of the stacked data improves the signal-to-noise ratio by a factor of 10 thereby reducing the external field influence and improving the precision of measurements.

Still another object of the present invention is to overcoming the natural variations in transient field and viewing the results of each measurement in the field itself immediately.

### SUMMARY OF THE INVENTION

Accordingly the present invention provides a system for scanning of earth's Self-Potential field, said system comprising: a mobile computing device (1.7); a multiplexer (1.4); a connector bank (1.3) having a plurality of connectors; a reference electrode (1.2); a plurality of measuring electrodes arranged in the form of a matrix(1.1), wherein each row of the said electrode matrix being connected to each connector of the connector bank (1.3); said analog multiplexer (1.4) being connected to the said connector bank to select at least one electrode from the said electrode matrix; a data acquisition (DAQ) card (1.6) operatively coupled to said computing device and configured to control the said analog multiplexer; and wherein said computing device (1.7) is configured with a data acquisition software to perform data acquisition, numeric data display, profile and color shaded image form, create data files and incorporate automatic repetitive data.

In an embodiment of the present invention the data acquisition software is combined with ActiveX control software comprising the following steps;
I. starting data acquisition from the self potential scanning system,
II. starting self potential scanning and initiating the following actions;
   i. creating data file name by using system date and time;
   ii. opening the data file with the name as created in step (i);
   iii. creating header information consisting latitude, longitude, location, file name, electrode spacing and user note.
III. starting scan interval timer;
IV. setting electrode number to zero, enabling self potential timer and enabling scan interval timer;
V. starting self potential timer;
VI. checking if time exceed more than 100ms, calling to 'SelectedAddress' function; else returning back to the step (VI);
VII. setting electrode number to 1, sending command to DAQ card to output electrode number on the digital output bus to control analog multiplexer for self potential measurment;
VIII. configuring DAQ card such that self potential is measured on channel zero in bipolar differential mode with stacking number as entered by the user and calling 'AcquireData function;
IX. checking if the electrode number < 65;
X. if no as in step (i), reading the self potential data on channel zero of DAQ card for 'n' number of times, averaging the self potential data and storing it in a data file in matrix form with matrix index equal to the current electrode number and return to step (V);
XI. if yes, as in step (i), recording self potential data for electrode number zero and resetting electrode number to zero;
XII. disabling self potential timer;
XIII. displaying self potential data numerically;
XIV. displaying command if profile command displaying self potential profile, if image command plotting self potential image and if numeric command displaying self potential numerically, else checking scan interval;
XV. checking if the scan interval is completed;
XVI. if yes as in step (XV), returning to the step (II), else returning to the step (XIV).

In an embodiment of the present invention, said multiplexer is an analog multiplexer being connected to the said connector bank to select at least one electrode from the said electrode matrix.

The system as claimed in claim 3, further comprising an instrumentation amplifier (1.5) operatively connected to the analog multiplexer and configured to receive and convert the analog signals into digital signals.

In another embodiment of the present invention the measuring electrodes are arranged in the form of 8x8 matrix.

In another embodiment of the present invention the data stacking parameter (number of measurements at each electrode) is user selectable and the stacking up to 100 times can be used to improve the signal to noise ratio by a factor of 10.

In yet another embodiment of the present invention the time interval for scanning each electrode is 0.5 milliseconds and the image is displayed in fraction of a minute.

In yet another embodiment of the present invention the data acquisition software has the data playback feature which enables the user to chose previously recorded data file from a drop down folder/file list and display the data in numeric, profile and image forms comprising the following steps:
- starting the DAQ software interface;
- displaying GUI interface;
- selecting data file option from data source frame;
- displaying directory list box and file list box;
- opening self potential data folder and selecting the folder;
- populating the file list box with the files from the selected folder;
- selecting the data file to be played back;
- reading the self potential data from the file and displaying on a special data form by giving following commands;
   - printing self potential data;
   - closing data form;
   - showing self potential data;
   - plotting self potential profile;
   - drawing self potential image.

In yet another embodiment of the present invention the data acquisition software is used to profile the self potential images in point potential or gradient potential or relative potential form.

In yet another embodiment of the present invention the self potential images profiled are used in mineral prospecting, detection and delineation of thermal sources in geothermal and volcanic areas and ground water studies.

In yet another embodiment of the present invention addresses the effect of telluric induced SP (noise) by virtue of fast scanning (32 milliseconds) for each set of measurement and by computing the potential gradient between stations of measurement from the data acquired.

In yet another embodiment of the present invention a 64 channel analog multiplexer (designed using ADG 508 ICs) is used to select one of the 64 electrodes and the signal from the sequentially selected electrode is fed to an instrumentation amplifier which provides high input impedance and also eliminate common mode noise (such as power line induced noise) present between the measured electrode and reference electrode (**1.2**).

In yet another embodiment of the present invention the PCMCIA data acquisition card (NI-DAQCard-6036E), in conjunction with a laptop computer and ActiveX control software, controls analog multiplexer to select a particular electrode and converts the signal to a digital number with 16 bit resolution and accuracy better than ± 3LSB (±45.6 µV).

In still another embodiment of the present invention the specially developed data acquisition software, with embedded Active X controls, performs data acquisition, data display in numeric, profile and color shaded image forms, creates data files and incorporates automatic repetitive data scanning feature.

In still another embodiment of the present invention the in-house developed software has the data playback feature which enables the operator to chose previously recorded data file from a drop down folder/file list and display the data in numeric, profile and image forms.

Accordingly, the present invention also related to a method for scanning of earth's Self-Potential field, said method comprising:
a) arranging a plurality of measuring electrodes in the form of a n x n matrix;
b) selecting at least one electrode from the said electrode matrix;
c) receiving measured values of self-potential for thus selected electrode;
d) repeating steps (a) to (c) for each electrode in the electrode matrix;
e) converting the stacked potential value from analog to digital form;
f) analyzing and mapping said analyzed data into graphical data; and
g) displaying said graphical data.

In an embodiment of the present invention, the method further comprising the following steps;
a) starting data acquisition from the self potential scanning system,
b) starting self potential scanning and initiating the following actions;
   i) creating data file name by using system date and time;
   ii) opening the data file with the name as created in step (i);
   iii) creating header information consisting latitude, longitude, location, file name, electrode spacing and user note.
c) starting scan interval timer;
d) setting electrode number to zero, enabling self potential timer and enabling scan interval timer;
e) starting self potential timer;
f) checking if time exceed more than 100ms, calling to 'SelectAddress' function; else returning back to the step (f);
g) setting electrode number to 1, sending command to DAQ card to output electrode number on the digital output bus to control analog multiplexer for self potential measurement;
h) configuring DAQ card such that self potential is measured on channel zero in bipolar differential mode with stacking number as entered by the user and calling 'AcquireData' function;
i) checking if the electrode number < 65;
j) if no as in step (i), reading the self potential data on channel zero of DAQ card for 'n' number of times, averaging the self potential data and storing it in a data file in matrix form with matrix index equal to the current electrode number and return to step (e);
k) if yes, as in step (i), recording self potential data for electrode number zero and resetting electrode number to zero;
l) disabling self potential timer;
m) displaying self potential data numerically;
n) displaying command if profile command displaying self potential profile, if image command plotting self potential image and if numeric command displaying self potential numerically, else checking scan interval;
o) checking if the scan interval is completed; and
p) if yes as in step (o), returning to the step (b), else returning to the step (n).

In another embodiment of the present invention, the method further comprising the following steps;
I) starting the DAQ software interface;
II) displaying GUI interface;
III) selecting data file option from data source frame;
IV) displaying directory list box and file list box;
V) opening self potential data folder and selecting the folder;
VI) populating the file list box with the files from the selected folder;
VII) selecting the data file to be played back; and
VIII) reading the self potential data from the file and displaying on a special data form by giving following commands;
   - printing self potential data;
   - closing data form;
   - showing self potential data;
   - plotting self potential profile;
   - drawing self potential image.

### BRIEF DESCRIPTION OF DRAWINGS

In the drawings from figure 1-14, accompanying this specification:
FIG. 1: represents the schematic block diagram of Automated Multi-Electrode Self Potential Scanning System.
FIG. 2: represents the schematic diagram of Analog Multiplexer with instrumentation amplifier.
FIG. 3: represents the GUI interface of in-house developed data acquisition software
FIG. 4: represents the GUI interface for data file selection and numerical display of SP data.
FIG. 5: represents the display of SP data in profile form for each row of electrodes.
FIG. 6: represents the display of SP data in color shaded image form.
FIG. 7: represents the flowchart of the data acquisition software.
FIG. 8: represents the flowchart of data playback software.
FIG. 9: represents the data file format.
FIG.10: represents the SP Gradient Image obtained over an area of fracture controlled groundwater flow.
FIG. 11: represents the SP Survey field layout near natural spring discharge area and SP Measurement System.
FIG. 12: represents the SP Gradient Image obtained over an area near to natural spring discharge.
FIG. 13: represents the SP Gradient Image obtained over a known sulphide ore body.
FIG. 14: represents the resistivity image survey at Malkapur at SP survey site indicating conducting zone.

### DETAILED DESCRIPTION OF THE INVENTION

The present invention provides a system for scanning of earth's self potential field repeatedly at a given location in a fully automated manner. The SP images, thus captured, would be useful in groundwater flow studies, sulphide ore exploration, CO₂ emission studies in carbon sequestration experiments and in mapping the effectiveness of oil recovery measures. The present invention has been designed to overcome many drawbacks of conventional SP measurement method, by leveraging the availability of fast data acquisition cards (200,000 samples/second, 16 bit resolution, accuracy: ±3LSB), analog multiplexers ICs with low channel resistance and fast switching characteristics, computers with Visual Basic program development environment incorporating Active X control features.

To achieve the above-mentioned goal, the inventors of the present invention designed and fabricated a system which comprises a set of 64-porous pot electrodes for sensing the self potential; suitable cables to connect the electrodes, placed in 8 by 8 grid with spacing of up to 2 meters, to the analog multiplexer/amplifier unit; a means to correct for the ADC and amplifier offset; a means to select a particular electrode, out of grid of 64, for measurement; means to generate difference signal with respect to reference electrode; means to convert analog signal to digital signal; means to record the measured signals and display the recorded data in numeric, profile and image forms; means to automate the image scanning sequence with user selected repetition rate and stacking number; and a means to playback the previously scanned SP data by selecting a data file from a dropdown menu of folders and files.

This invention will be better understood with the following figures;

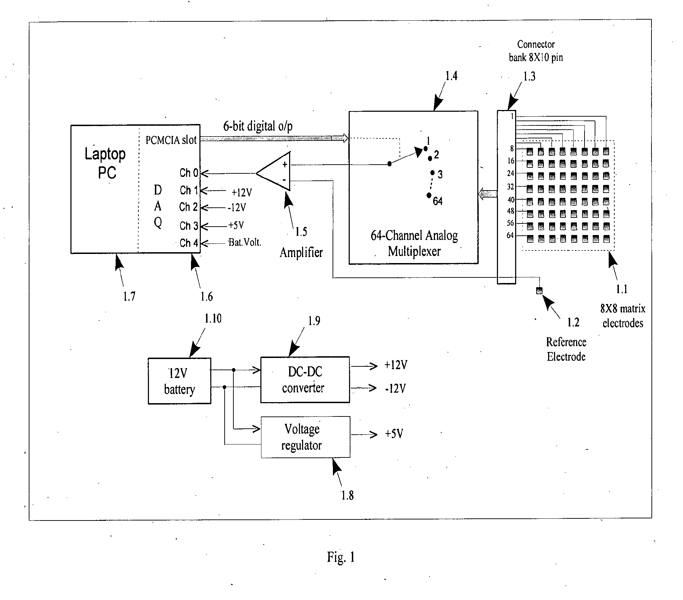

FIG. 1 shows a schematic diagram of the system of the present invention that can scan the SP data, store the data, display the image and repeat the sequence at user selected interval.

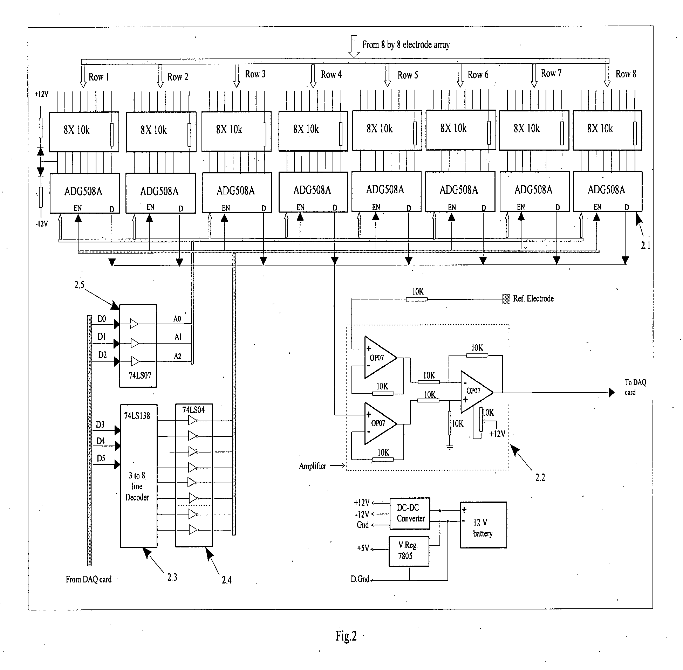

As shown in FIG.1, the system, for scanning SP data according to the present invention, comprises 64-porous pot non-polarizing electrodes planted in a grid of 8 rows and 8 columns (**1.1**) to sense the self-potential and connected to a connector bank (**1.3**) consisting of 8 connectors, one connector for each row of electrodes and a separate connector for connecting the reference electrode (**1.2**); an analog multiplexer with 64-channels (**1.4**) connects one of the 64-electrodes, as per the 6-bit digital output provided by the DAQ (Data Acquisition) card(**1.6**) (NI DAQCard6036E), to the instrumentation amplifier(**1.5**) whose output is the difference between the signals from the selected electrode and the reference electrode; a rugged laptop computer(**1**.**7**) with in-house developed GUI software for carrying out automated data acquisition through the DAQ card which is inserted into the PCMCIA slot of the laptop; a 12V, 7AH rechargeable battery is the power source**(1.10)** whose output is converted to +12V and -12V by using a DC-DC converter(**1**.**9**) chip (Traco Power TEM3-1221) and to +5V using IC7805(**1.8**) as required by the analog and digital circuits of the apparatus. FIG. 2 is the schematic diagram of 64-channel analog multiplexer & Instrumentation amplifier showing the design details and consist eight number of 8 channel analog multiplexer**(2.1)** integrated chips (ADG508A) an instrumentation amplifier(**2.2**) based on operational amplifier OP07, a 3 to 8 line decoder(**2**.**3**) chip (74LS138) for decoding 3 bit digital data, from the DAQ card, to 8 bit data for enabling one of the eight ADG508A chips, an inverter chip, 74LS04(**2.4**) for inverting the 'low true' logic output of 74LS138 to 'high true' logic and TTL buffer(**2.5**) chip (74LS07) for buffering 3-bit digital output from DAQ card for driving channel select inputs (A0,A1,A2) of ADG508A.

The working of the apparatus using the parts detailed in Figures 1 and 2 in conjunction with the in-house developed software is explained hereunder.

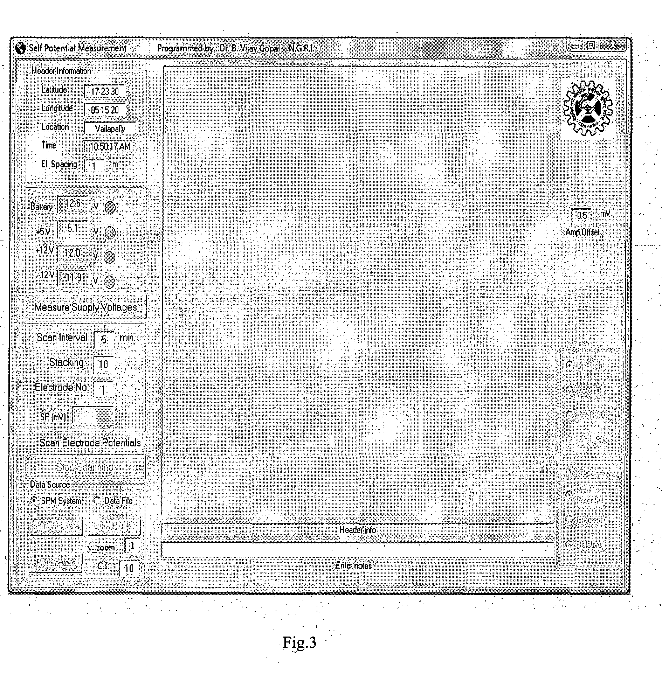

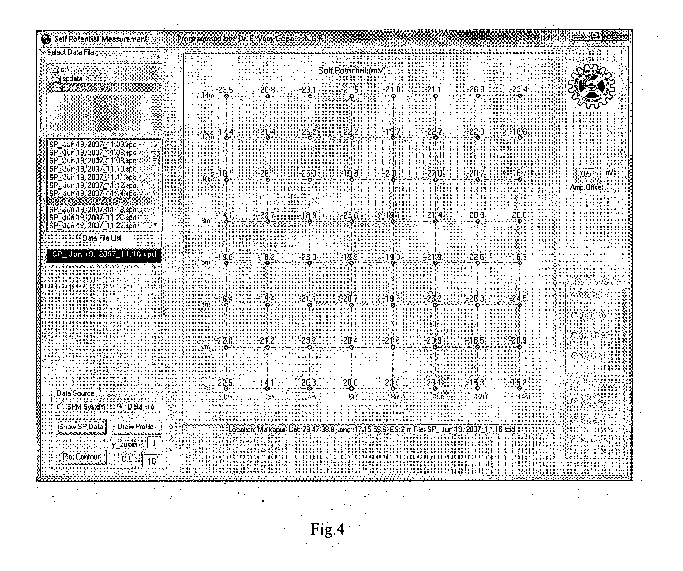

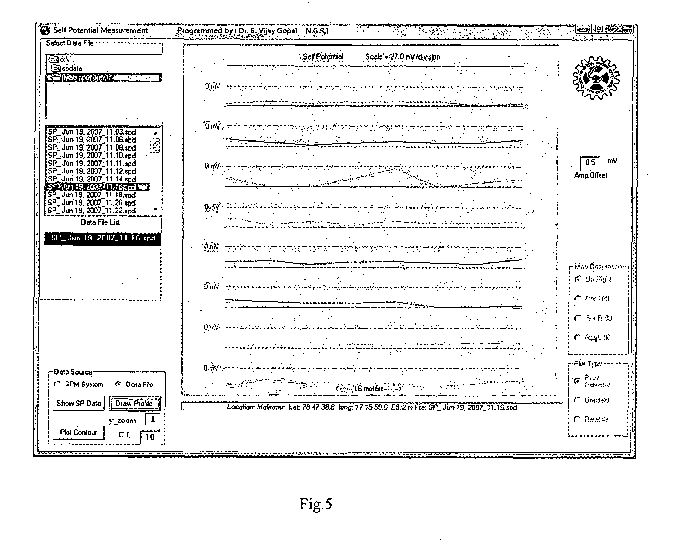

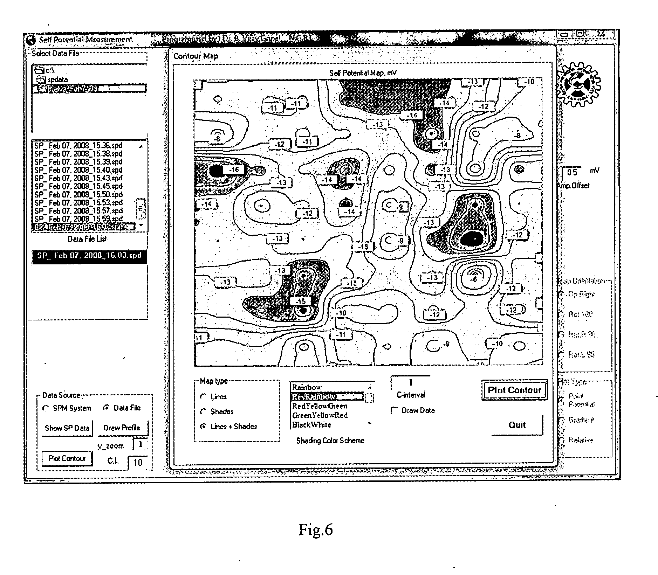

The GUI interface of the data acquisition software is shown in FIG.3. Operator can enter header information such as position, location and inter-electrode spacing in the text boxes provided in the 'Header Information' frame. Current CPU time is displayed and updated every second for using with the automatic data file naming process. Battery status and power supplies are monitored at regular intervals and status is displayed in numeric as well as graphic form where green indicates normal power supply while red indicates a problem. Operator can also enter 'Scan Interval' and 'Stacking Number'. Operator has the option of selecting the data source either from Self Potential Measurement (SPM) system or from a Data File which was recorded previously. Clicking on the 'Scan Electrode Potentials' button initiates a series of actions as given below:
i. Data file name is generated by concatenating 'SP_', 'fdate' and 'ftime' strings, where 'fdate' and 'ftime' are derived from the computer system. The file extension is '.spd', where spd stands for self potential data. (For example, typical file name is 'SP_ Apr 24, 2007_12.15.spd"). A data file with this name is opened and header information, consisting of latitude, longitude, location, electrode spacing, data file name and operator comment, is written.
ii. Data acquisition card (**1.6**) is configured such that SP is measured on channel '0' in bipolar differential mode with input range ±500mV and with 'n' successive measurements, where, 'n' is the data stacking number entered by the operator.
iii. A command to DAQ card is given to generate digital code (electrode number) which selects the analog channel connecting a particular SP electrode for measurement. Then, an 'AI.start' command to the DAQ card commences 'n' consecutive measurements using 16-bit A to D converter and returns an array called 'Scaled Data' consisting of the 'n' consecutive measurements. The data is averaged and stored in another array called 'sp_matrix' with index equal to the electrode number. An instrumentation amplifier is used to provide an output proportional to the difference of potentials on the selected electrode and a reference electrode, as shown in Fig 2.
iv. The above step is repeated 64 times varying electrode number from 1 to 64 in step of 1. Between the repetitions a user selected delay (1 ms to 10 ms) is introduced for signals to stabilize, after analog channel switching, before measurement commences on the next electrode.
v. The data stored in 'sp_matrix' is written in to the data file (created in step 1) in the form of 8 rows and 8 columns. Then the data file is closed. Thus a separate data file is created for each scan with the header, containing information about the location, time, user comment etc., and the SP data in text format.
vi. SP scanning cycle, as described in steps i to v, is repeated at regular intervals till stop command is given. This interval, called 'scan interval' is entered by the user in units of minutes.
vii. After each scanning cycle, the data stored in the data file is read back and it is displayed in numeric form as shown in Fig.4.
viii. After each scanning user has a choice of displaying the data either in profile form or in image form as shown in Fig.5 and Fig.6, respectively.

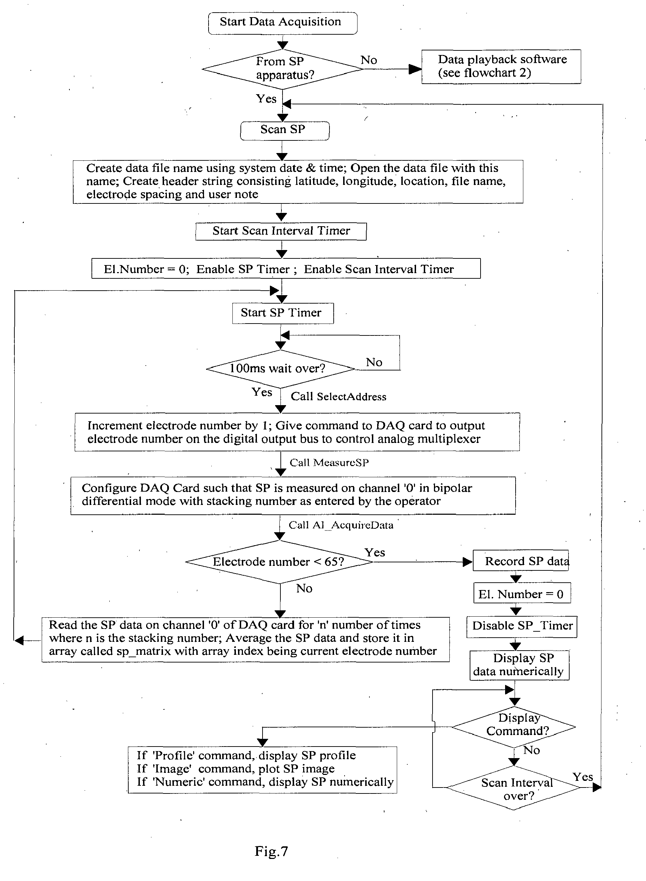

The above sequence of events is better understood by the simplified program flowchart as shown in Fig.7. This software has been developed using Visual Basic version 6.0 programming language into which third party ActiveX software controls are embedded and their functions are utilized for efficiently interfacing with DAQ card (NI, NIDAQ-603E) and for drawing color shaded contour maps using Component Source-MM Contours ActiveX control. The figure-4 shows the option of plotting the SP data in three forms;
1. Point potential
2. Gradient potential
3. Relative.

When SP is measured with reference to a remotely placed reference electrode the resulting data is called 'Point potential'. If the SP is measured as the difference between two successive electrodes and associated with the middle position of the two electrodes, it is called 'Gradient potential'. Finally, if the reference electrode is shifted to any of the grid positions, the resulting SP is called 'Relative potential'.

In the present invention only point potential is measured and the other two types of potentials are derived by software calculation. This became possible because all the grid point potentials and spatial information are stored in a memory matrix. Depending on the application, user has the choice of selecting the plot type as shown in Fig.4 (GUI interface).

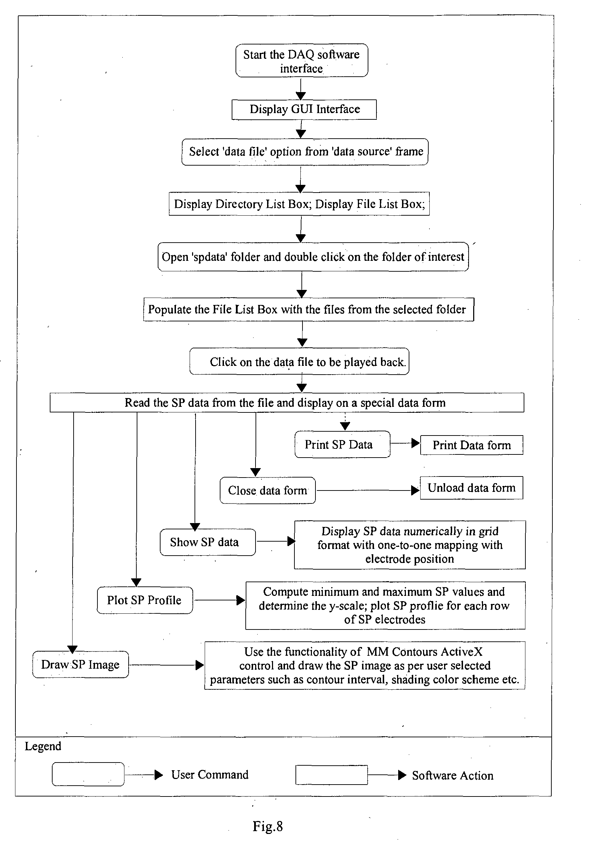

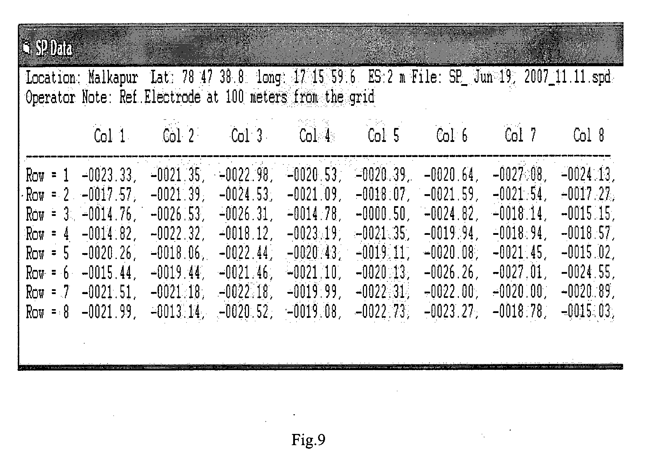

The previously recorded SP data can be played back with ease by the 'data playback' feature of the software as illustrated by means of flowchart shown in Fig.8. A menu of folders and files are displayed for user to select the data file to be retrieved and displayed. Once the file is selected the SP data is displayed in printable form as shown in Fig.9. At this point user can command to display the data either in profile or image form. Prior to scanning the SP, ADC and amplifier offsets are monitored by shorting the two inputs coming from reference electrode and one of the grid electrodes. This offset value is entered in the 'amplifier offset' text box by the operator and the software automatically corrects for this offset during the scanning.

### EXAMPLE

The following examples are given by way of illustration of the working of the invention in actual practice and should not be construed to limit the scope of the present invention in any way.

### EXAMPLE-1

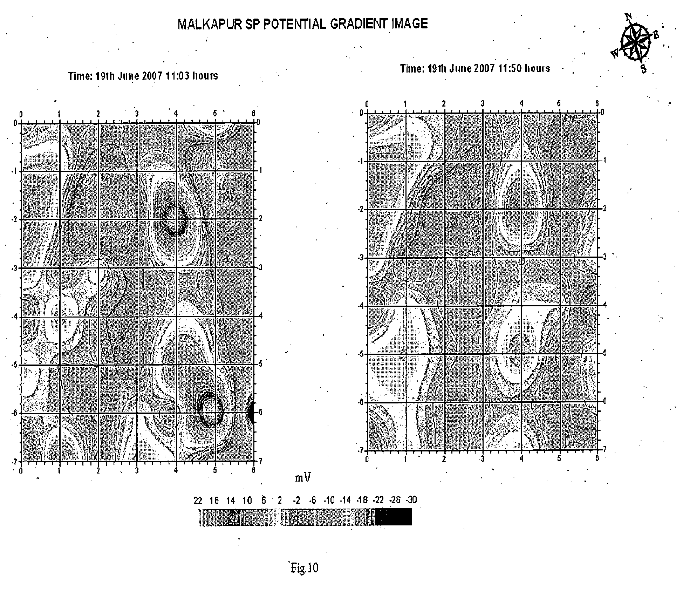

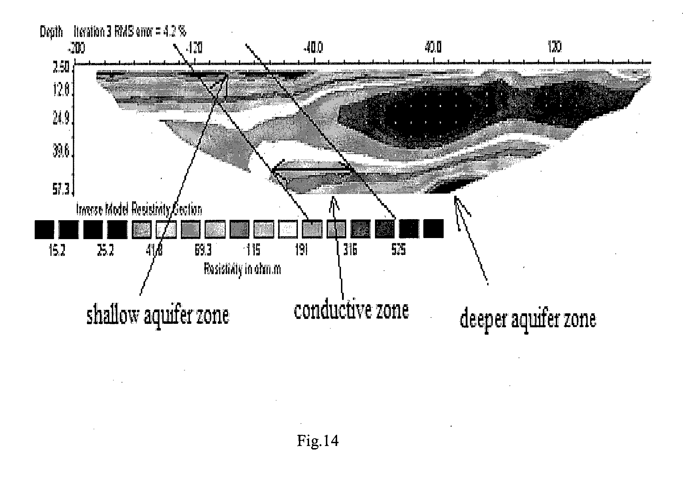

The first field test was conducted over an area of 196 sq. m area of known fracture zone at a depth of 12 m in a granitic terrain. In order to study the streaming potential field due to preferred groundwater flow through this fracture zone of limited width, the apparatus developed was subjected to field test with 64 NP electrodes arranged in a 14 m x 14 m grid with 2 m inter-electrode spacing and orientation of N 20° E - S 20° W. The reference electrode was placed at nearly 100 m south of the survey area. The SP images were generated at an interval of 1 minute for about 47 minutes of observation period. With the measured potential data at each nodal points, the gradient between the two successive pairs of electrodes were generated and the gradient analysis focused clearly the preferred flow path of groundwater in the direction of more or less N 20° E - S 20° W exhibiting the utility of this apparatus. The SP gradient images for 11:03 Hrs. (starting) and 11:50 Hrs. (Closing) of survey periods are presented in Fig. 10. This image indicates preferred flow path of groundwater in the direction N20°E-S20°W. The follow-up survey of Resistivity tomography using multi-electrode imaging geophysical studies confirmed that the western part of survey area indicated a conductive zone which could be the pathway for groundwater movement. The resistivity image (shown in Fig.14) indicates that the deeper aquifer zone is getting connected with the shallow aquifer through this zone.

### EXAMPLE-2

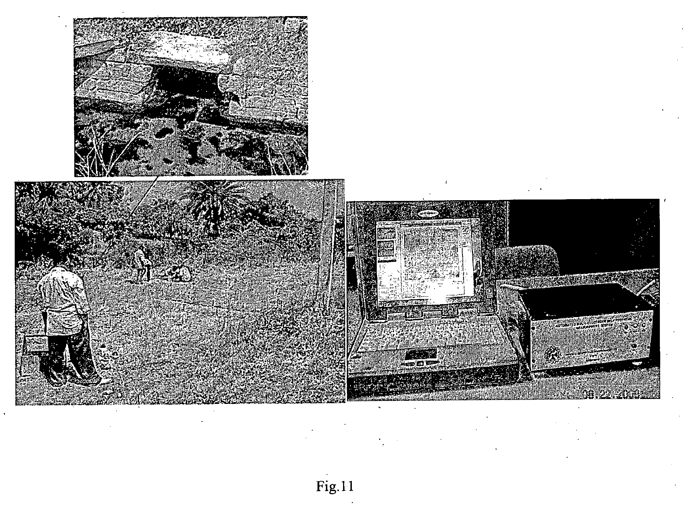

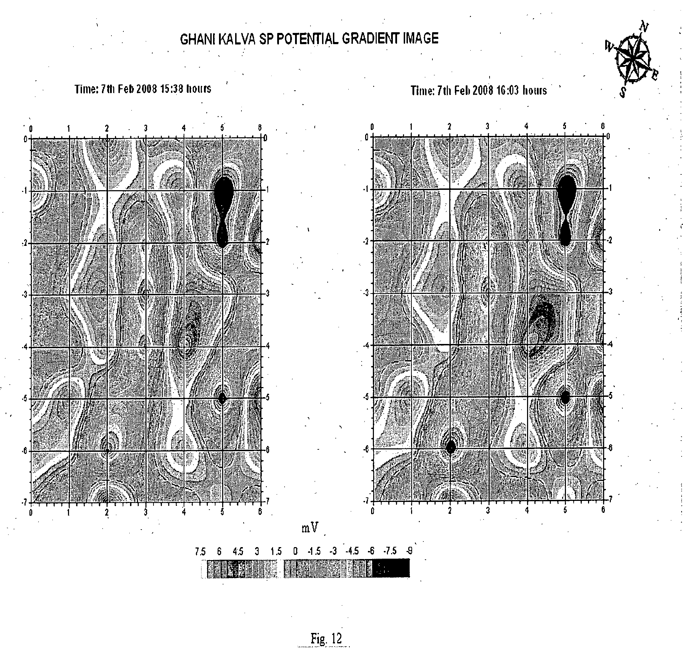

The second example presented is over a sedimentary basin where the groundwater drains into the stream as a spring discharge. The spring discharge well site along with the measurement arrangements laid over the surface area adjacent to the mouth of the spring is shown in Fig. 11.The SP survey over a grid area of 14 m x 14 m with 64 NP electrodes placed with a 2 m station interval adjacent to the spring discharge point with a orientation of N 20° W - S 20° E was conducted for about 25 minutes with data set generated at every minute. The data acquired by the apparatus was used to generate the SP gradient images. The images facilitated in mapping the probable sub-surface groundwater flow path and demonstrated the utility of the apparatus designed. The SP gradient image generated from the data acquired for the two time periods are presented in Fig.12.

### EXAMPLE -3

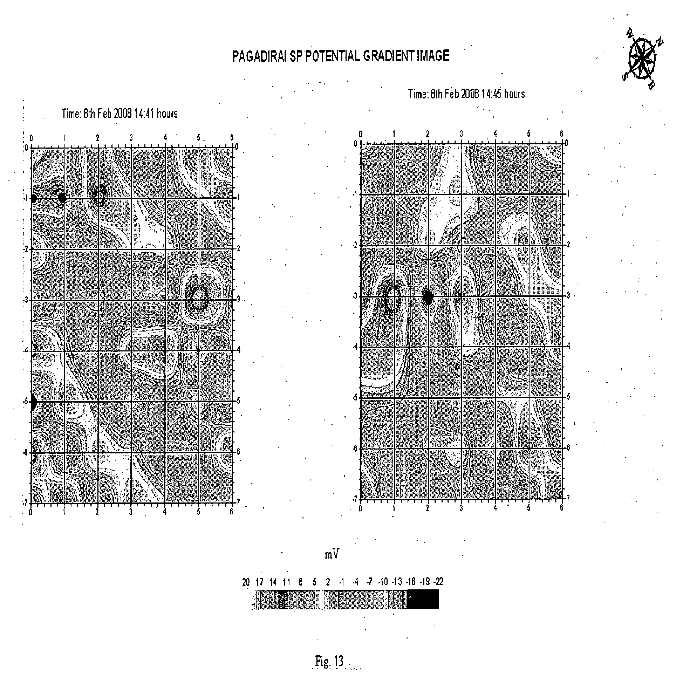

The third field testing was carried out over an area of known copper sulphide ore and associated auriferous deposits to find out the efficacy of the apparatus developed in mineral prospecting. The grid laid in N 70° W - S 70° E direction parallel to the strike direction of host formations with 2m grid interval. The reference electrode was kept at a distance of 150m in southwest part of the surveyed area. The SP survey was conducted for about 20 minutes with acquisition of data for every minute. The SP data was subjected to potential gradient analysis for further analysis and the images obtained from the processed data are presented in Fig. 13. It is clearly seen that the linear anomaly aligned in almost east-west direction corroborate with the direction of mineralization along the shear & fractures which are perpendicular to the host formation strike. The anomaly is further enhanced and facilitated in validating the effectiveness of the instrument performance in mineral prospecting.

### ADVANTAGES OF THE INVENTION

The present invention has following main advantages;
1. It is a handy tool capable of generating Self-Potential image (in color contour and shaded form) over the study area in a moment. Since the variation in self potential is due to the flow of sub-surface ground water in preferred path, the invention can be used for groundwater exploration and ground water contaminant studies.
2. Data corresponding to the area, in multiples of 8 x 8 matrix (users choice of electrode spacing), could be acquired and viewed as an image within a minute of grounding the electrodes overcoming the natural constraint of unstable SP in time.
3. The data stacking facility provides an improved signal to noise ratio making the tool capable of measuring very small signals in the presence of cultural noise.
4. Availability of processed SP image in the field itself facilitates the explorer to refine their application or exploration strategies.
5. Capable of scanning the SP image in an automated manner at user selected time interval enabling one to study the change in groundwater conditions with time and water infiltration process at shallow depths, etc.
6. As self potential is also related to partial pressure of trapped gases in sub-surface, such as CO2, it is a potential tool for carbon sequestration studies also.
7. Acquired data can be played back in gridded numeric, profile and color contoured image forms for further analysis and reporting.

## Claims

1. A system for scanning of earth's Self-Potential field, said system comprising:
a mobile computing device (1.7);
a multiplexer (1.4);
a connector bank (1.3) having a plurality of connectors;
a reference electrode (1.2);
a plurality of measuring electrodes arranged in the form of a matrix(1.1), wherein each row of the said electrode matrix being connected to each connector of the connector bank (1.3); said analog multiplexer (1.4) being connected to the said connector bank to select at least one electrode from the said electrode matrix;
a data acquisition (DAQ) card (1.6) operatively coupled to said computing device and configured to control the said analog multiplexer to select at least one electrode and convert analog signal to a digital number; and
wherein said computing device (1.7) is configured with a data acquisition software to perform data acquisition, numeric data display, profile and color shaded image form, create data files and incorporate automatic repetitive data.

2. The system as claimed in claim 1, wherein the data acquisition software is combined with ActiveX control software, which is adopted to carry out the following steps;
a) starting data acquisition from the self potential scanning system,
b) starting self potential scanning and initiating the following actions;
i) creating data file name by using system date and time;
ii) opening the data file with the name as created in step (i);
iii) creating header information consisting latitude, longitude, location, file name, electrode spacing and user note.
c) starting scan interval timer;
d) setting electrode number to zero, enabling self potential timer and enabling scan interval timer;
e) starting self potential timer;
f) checking if time exceed more than 100ms, calling to 'SelectAddress' function; else returning back to the step (f);
g) increment electrode number by 1 , sending command to DAQ card to output electrode number on the digital output bus to control analog multiplexer for self potential measurement;
h) configuring DAQ card such that self potential is measured on channel zero in bipolar differential mode with stacking number as entered by the user and calling 'AcquireData' function;
i) checking if the electrode number < 65;
j) if no as in step (i), reading the self potential data on channel zero of DAQ card for 'n' number of times, averaging the self potential data and storing it in a data file in matrix form with matrix index equal to the current electrode number and return to step (e);
k) if yes, as in step (i), recording self potential data corresponding to 64 SP electrodes in a data file created at step (b) and resetting electrode number to zero;
l) disabling self potential timer;
m) displaying self potential data numerically;
n) checking if display command is given by the user, if yes, check for the type of display desired and display accordingly: displaying command if profile command displaying self potential profile, if image command plotting self potential image and if numeric command displaying self potential numerically;
o) if no, as in step (n), checking if the scan interval is completed;
p) if yes as in step (o), returning to the step (b), else returning to the step (n).

3. The system as claimed in claim 1, further comprising an instrumentation amplifier (1.5) operatively connected to the analog multiplexer and configured to provide an output proportional to the difference of potentials on the selected electrode and a reference electrode.

4. The system as claimed in claims 1 and 2, wherein the measuring electrodes are arranged in the form of 8x8 matrix.

5. The system as claimed in claims 1 and 2, wherein the data stacking parameter (number of measurements at each electrode) is user selectable and suitable for improving the signal to noise ratio by a factor of 10 when the stacking parameter is set to 100.

6. The system as claimed in claims 1 and 2, wherein the time interval for scanning each electrode is 0.5 milliseconds and the image is displayed in fraction of a minute.

7. The system as claimed in claims 1 and 2, wherein the data acquisition software has the data playback feature which enables the user to chose previously recorded data file from a drop down folder/file list and display the data in numeric, profile and image forms comprising the following steps;
I) starting the DAQ software interface;
II) displaying GUI interface;
III) selecting data file option from data source frame;
IV) displaying directory list box and file list box;
V) opening self potential data folder and selecting the folder;
VI) populating the file list box with the files from the selected folder;
VII) selecting the data file to be played back;
VIII) reading the self potential data from the file and displaying on a special data form by giving following commands;
• printing self potential data;
• closing data form;
• showing self potential data;
• plotting self potential profile;
• drawing self potential image.

8. The system as claimed in claims 1-5, wherein the data acquisition software is used to profile the self potential images in point potential or gradient potential or relative potential form.

## Patentansprüche

1. Ein System zum Scannen des Eigenpotentialfeldes der Erde, wobei besagtes System umfasst:
einen mobilen Computer (1.7);
einen Multiplexer (1.4);
eine Anschlussleiste (1.3) mit einer Vielzahl an Anschlüssen;
eine Referenzelektrode (1.2);
eine Vielzahl an Messelektroden, die in Form einer Matrix (1.1) angeordnet sind, wobei jede Reihe der besagten Elektrodenmatrix an jeweils einem Anschluss der Anschlussleiste (1.3) angeschlossen ist; wobei besagter analoger Multiplexer (1.4) an besagter Anschlussleiste angeschlossen ist, um wenigstens eine Elektrode von besagter Elektrodenmatrix auszuwählen;
eine Datenerfassungskarte (DAQ) (1.6), die mit besagtem Computer funktionsfähig verbunden und konfiguriert ist, um besagten analogen Multiplexer zu steuern, um wenigstens eine Elektrode auszuwählen und ein analoges Signal in eine digitale Zahl zu konvertieren; und
wobei besagter Computer (1.7) mit einer Datenerfassungssoftware konfiguriert ist, um Datenerfassung, Anzeige numerischer Daten, Profilform und Bildform mit Farbabstufungen auszuführen, Datendateien anzulegen und automatisch repetitive Daten einzufügen.

2. Das System wie in Anspruch 1 beansprucht, wobei die Datenerfassungssoftware mit ActiveX Steuerungssoftware kombiniert wird, das zur Durchführung der nachfolgenden Schritte angepasst ist:
a) Starten der Datenerfassung des Eigenpotential-Scanningsystems,
b) Starten des Eigenpotential-Scannings und Starten der folgenden Aktionen;
i) Erzeugen der Datendateibezeichnung unter Verwendung von Systemdatum und - zeit;
ii) Öffnen der Datendatei mit der in Schritt (i) erzeugten Bezeichnung;
iii) Erzeugen der Kopfzeileninformation, bestehend aus Latitude, Longitude, Ort, Dateibezeichnung, Elektrodenabstand und Nutzerkommentar;
c) Starten des Scan Interval Timers;
d) Nullsetzen der Elektrodennummer, Aufrufen von Eigenpotential-Timer und Scan Interval Timer
e) Starten des Eigenpotential-Timers;
f) Kontrollieren, ob Zeit mehr als 100 ms beträgt, Aufrufen der 'SelectAddress' Funktion; andernfalls zurück zu Schritt (f);
g) Erhöhen der Elektrodennummer um 1, Senden eines Befehls an die DAQ-Karte, um Elektrodennummer auf dem digitalen Ausgabebus auszugeben, um den analogen Multiplexer für die Eigenpotentialmessung zu steuern;
h) Konfigurieren der DAQ-Karte, so dass das Eigenpotential auf Kanal null in bipolarem Differenzialmodus mit der vom Nutzer eingegebenen Stapelnummer gemessen wird und Aufrufen der 'AcquiredData' Funktion;
i) Prüfen, ob die Elektrodennummer < 65;
j) wenn nein in Schritt (i), Lesen des Eigenpotentialdaten auf Kanal null der DAQ-Karte 'n'-mal, Bildung des Durchschnitts der Eigenpotentialdaten und deren Abspeicherung in einer Datendatei in Matrixform, wobei Matrixindex gleich der jeweiligen Elektrodennummer ist, und zurück zu Schritt (e);
k) wenn ja in Schritt (i), Aufzeichnen der Eigenpotentialdaten, die 64 SP-Elektroden entsprechen, in einer in Schritt (b) angelegten Datei und Rücksetzen der Elektrodennummer auf null;
l) Abschalten des Eigenpotential-Timers;
m) numerisches Anzeigen der Eigenpotentialdaten;
n) Prüfen, ob der Anzeigebefehl vom Nutzer gegeben ist, wenn ja, Prüfen des erwünschten Anzeigentyps und der entsprechenden Anzeige; Anzeigen des Befehls, wenn Profilbefehl, dann Eigenpotentialprofil anzeigen, wenn Bildbefehl, dann Eigenpotentialbild plotten und wenn numerischer Befehl, dann Eigenpotential numerisch anzeigen;
o) wenn nein in Schritt (n), Prüfen ob Scanintervall vollständig ist;
p) wenn ja in Schritt (o), zurück zu Schritt (b), andernfalls zurück zu Schritt (n).

3. Das System wie in Anspruch 1 beansprucht, außerdem umfassend einen Messverstärker (1.5), der am analogen Multiplexer funktionsfähig angeschlossen und konfiguriert ist, um eine Ausgangsleistung proportional zur Differenz der Potentiale an der ausgewählten Elektrode und einer Referenzelektrode bereitzustellen.

4. Das System wie in Ansprüchen 1 und 2 beansprucht, wobei die Messelektroden in Form einer 8x8 Matrix angeordnet sind.

5. Das System wie in Ansprüchen 1 und 2 beansprucht, wobei der Datenstapelparameter (Anzahl an Messungen an jeder Elektrode) vom Nutzer ausgewählt werden kann und zur Verbesserung des Signal-Rausch-Verhältnisses um Faktor 10 geeignet ist, wenn der Stapelparameter auf 100 gesetzt wird.

6. Das System wie in Ansprüchen 1 und 2 beansprucht, wobei das Zeitintervall zum Scannen jeder Elektrode 0,5 Millisekunden beträgt und das Bild in Minutenbruchteilen angezeigt wird.

7. Das System wie in Ansprüchen 1 und 2 beansprucht, wobei die Datenerfassungssoftware ein Datenwiedergabe-Funktion aufweist, die dem Nutzer ermöglicht, eine zuvor aufgezeichnete Datendatei aus einem Dropdown-Ordner/Dateiliste auszuwählen und die Daten in numerischer Form, in Profil- und Bildform anzuzeigen, umfassend die nachfolgenden Schritte:
I) Starten der DAQ-Software-Schnittstelle;
II) Anzeigen der GUI-Schnittstelle;
III) Auswählen der Datendatei-Option aus Data source frame;
IV) Anzeigen von Verzeichnisfeld und Dateilistenfeld;
V) Öffnen des Eigenpotential-Datenordners und Auswählen des Ordners;
VI) Füllen des Dateilistenfeldes mit den Dateien aus dem ausgewählten Ordner;
VII) Auswählen der Datendatei, die wiedergegeben werden soll;
VIII) Lesen der Eigenpotentialdaten aus der Datei und Anzeigen in einer speziellen Datenform, indem die folgenden Befehle erteilt werden:
• Drucken der Eigenpotentialdaten;
• Schließen der Datenform;
• Anzeigen der Eigenpotentialdaten;
• Plotten des Eigenpotentialprofils;
• Zeichnen des Eigenpotentialbildes.

8. Das System wie in den Ansprüchen 1 bis 5 beansprucht, wobei die Datenerfassungssoftware zur Darstellung der Eigenpotentialbilder in Punktpotentialform oder Gradientenpotentialform oder relativer Potentialform verwendet wird.

## Revendications

1. Système pour balayer un champ d'auto-potentiel de la terre, ledit système comprenant :
un dispositif informatique mobile (1.7) ;
un multiplexeur (1.4) ;
une banque de connecteurs (1.3) comportant une pluralité de connecteurs ;
une électrode de référence (1.2) ;
une pluralité d'électrodes de mesure agencées sous la forme d'une matrice (1.1), dans lequel chaque rangée de ladite matrice d'électrodes est connectée à chaque connecteur de la banque de connecteurs (1.3) ; ledit multiplexeur analogique (1.4) étant connecté à ladite banque de connecteurs pour sélectionner au moins une électrode de ladite matrice d'électrodes ;
une carte d'acquisition de données (DAQ) (1.6) couplée fonctionnellement au dit dispositif informatique et configurée pour commander ledit multiplexeur analogique pour sélectionner au moins une électrode et convertir un signal analogique en un nombre numérique ; et
dans lequel ledit dispositif informatique (1.7) est configuré avec un logiciel d'acquisition de données pour effectuer l'acquisition de données, l'affichage de données sous forme numérique, de profil et d'image ombrée en nuance de couleur, créer des fichiers de données et incorporer des données répétitives automatiques.

2. Système selon la revendication 1, dans lequel le logiciel d'acquisition de données est combiné avec un logiciel de commande ActiveX, qui est adopté pour effectuer les étapes suivantes :
a) débuter l'acquisition de données à partir du système de balayage d'auto-potentiel,
b) débuter le balayage d'auto-potentiel et lancer les actions suivantes :
i) créer un nom de fichier de données en utilisant la date et l'heure du système ;
ii) ouvrir le fichier de données avec le nom tel que créé à l'étape (i) ;
iii) créer des informations d'en-tête consistant en une latitude, une longitude, un emplacement, un nom de fichier, un espacement d'électrodes et une note d'utilisateur,
c) démarrer le registre d'horloge d'intervalle de balayage ;
d) fixer le numéro d'électrode à zéro, valider le registre d'horloge d'auto-potentiel et valider le registre d'horloge d'intervalle de balayage ;
e) démarrer le registre d'horloge d'auto-potentiel ;
f) vérifier si le temps dépasse 100 ms, appeler la fonction 'SelectAddress' ; autrement retourner à l'étape (f) ;
g) incrémenter le numéro d'électrode de 1, envoyer une commande à la carte DAQ pour sortir le numéro d'électrode sur le bus de sortie numérique pour commander le multiplexeur analogique pour la mesure d'auto-potentiel ;
h) configurer la carte DAQ de sorte que l'auto-potentiel soit mesuré sur le canal zéro dans un mode différentiel bipolaire avec un numéro d'empilage tel qu'entré par l'utilisateur et appeler la fonction 'AcquireData' ;
i) vérifier si le numéro d'électrode < 65 ;
j) si la réponse est 'non' à l'étape (i), lire les données d'auto-potentiel sur le canal zéro de la carte DAQ un nombre 'n' de fois, moyenner les données d'auto-potentiel et les mémoriser dans un fichier de données sous une forme matricielle avec un indice de matrice égal au numéro d'électrode actuel et retourner à l'étape (e) ;
k) si la réponse est 'oui' à l'étape (i), enregistrer les données d'auto-potentiel correspondant aux 64 électrodes SP dans un fichier de données créé à l'étape (b) et réinitialiser le numéro d'électrode à zéro ;
l) désactiver le registre d'horloge d'auto-potentiel ;
m) afficher les données d'auto-potentiel numériquement ;
n) vérifier si une commande d'affichage est donnée par l'utilisateur, si la réponse est 'oui', vérifier le type d'affichage souhaité et effectuer l'affichage en conséquence : commande d'affichage, si commande de profil, afficher le profil d'auto-potentiel, si commande d'image, tracer l'image d'auto-potentiel, et si commande numérique, afficher l'auto-potentiel numériquement ;
o) si la réponse est 'non' à l'étape (n), vérifier si l'intervalle de balayage est terminé ;
p) si la réponse est 'oui' à l'étape (o), retourner à l'étape (b), autrement retourner à l'étape (n).

3. Système selon la revendication 1, comprenant en outre un amplificateur d'instrumentation (1.5) connecté de manière fonctionnelle au multiplexeur analogique et configuré pour fournir une sortie proportionnelle à la différence des potentiels sur l'électrode sélectionnée et une électrode de référence.

4. Système selon les revendications 1 et 2, dans lequel les électrodes de mesure sont agencées sous la forme d'une matrice 8x8.

5. Système selon les revendications 1 et 2, dans lequel le paramètre d'empilage de données (nombre de mesures au niveau de chaque électrode) peut être sélectionné par l'utilisateur et est approprié pour améliorer le rapport signal sur bruit d'un facteur 10 lorsque le paramètre d'empilage est fixé à 100.

6. Système selon les revendications 1 et 2, dans lequel l'intervalle de temps pour balayer chaque électrode est égal à 0,5 milliseconde et l'image est affichée en une fraction d'une minute.

7. Système selon les revendications 1 et 2, dans lequel le logiciel d'acquisition de données a la caractéristique de reproduction de données qui permet à l'utilisateur de choisir un fichier de données enregistré au préalable à partir d'une liste de dossiers/fichiers déroulante et d'afficher les données sous des formes numérique, de profil et d'image en effectuant les étapes suivantes :
I) démarrer l'interface de logiciel de DAQ ;
II) afficher une interface graphique utilisateur ;
III) sélectionner une option de fichier de données dans un cadre de sources de données ;
IV) afficher une boîte de liste de répertoires et une boîte de liste de fichiers ;
V) ouvrir un dossier de données d'auto-potentiel et sélectionner le dossier ;
VI) peupler la boîte de liste de fichiers avec les fichiers provenant du dossier sélectionné ;
VII) sélectionner le fichier de données à reproduire ;
VIII) lire les données d'auto-potentiel dans le fichier et afficher dans un formulaire de données particulier en donnant les commandes suivantes :
. imprimer les données d'auto-potentiel ;
. fermer le formulaire de données ;
. présenter les données d'auto-potentiel ;
. tracer le profil d'auto-potentiel ;
. dessiner l'image d'auto-potentiel.

8. Système selon les revendications 1 à 5, dans lequel le logiciel d'acquisition de données est utilisé pour former le profil des images d'auto-potentiel en une forme de potentiel ponctuel ou de potentiel de gradient ou de potentiel relatif.
